# EUROPEAN PATENT APPLICATION

(11) **EP 2 101 485 A1**
(43) Date of publication of application: **16.09.2009**
(21) Application number: 08152767.3
(22) Date of filing: 14.03.2008
(51) Int. Cl.: H04N 5/00, H04L 12/28, H04B 1/20

(54) **Intermediate device for receiving and sending signals and method for operating an intermediate device for receiving and sending signals**

(71) Applicant: Sony Corporation, Tokyo 108-0075 (JP)
(72) Inventor: Roth, Daniel, 70327, Stuttgart (DE); Sandring, Sten, 70327, Stuttgart (DE)
(74) Representative: Körber, Martin Hans

(57) **Abstract**

The present invention relates to an intermediate device (1) for receiving and sending signals, comprising a first interface (2) for enabling communication with at least a first electronic device (10a, 10b ... 10h) and for receiving a first signal from at least said first electronic device (10a, 10b ... 10h), a generating means (4) for generating a second signal based on said first signal and a second interface (3) for enabling communication with a second electronic device (10a, 10b ... 10h) and for sending the generated second signal to said second electronic device (10a, 10b ... 10h).

The present invention further relates to a method for operating an intermediate device (1) for receiving and sending signals.

## Description

The present invention relates to an intermediate device for receiving and sending signals and to a method for operating an intermediate device for receiving and sending signals. Specifically, the present invention relates to the field of handling different types of signals.

In general, electronic devices are used in a wide field of applications. Such electronic devices may for example be a personal computer, a television, a video recorder, a DVD or HDD recorder, facsimile devices, digital cameras, mobile terminals for wireless communication or other electronic consumer devices. An important task in developing electronic devices is to enable the devices to be connected to a network or to other electronic devices and to communicate with each other.

When connecting electronic devices either directly or via a network there may arise some problems in case that older electronic devices and new electronic devices are connected. This may lead to incompatibility problems due to different versions of hardware and/or software integrated in the electronic devices. Further, the electronic devices may communicate via different communication standards or protocols.

It is therefore the object of the present invention to overcome the above-mentioned problems. This object is solved by an intermediate device for receiving and sending signals according to claim 1 and by a method for operating an intermediate device for receiving and sending signals according to claim 16.

The present invention relates to an intermediate device for receiving and sending signals, comprising a first interface for enabling communication with at least a first electronic device and for receiving a first signal from at least said first electronic device, a generating means for generating a second signal based on said first signal and a second interface for enabling communication with a second electronic device and for sending the generated second signal to said second electronic device.

The present invention further relates to a method for operating an intermediate device for receiving and sending signals, comprising the steps of receiving a first signal from at least a first electronic device, generating a second signal based on said received first signal by a generating means and sending the generated second signal to a second electronic device.

Preferably, the generating means for generating the second signal converts the format of at least a part of the first signal into the format of the second signal.

Alternatively or additionally, the generating means for generating the second signal adds no, one or more commands to the first signal.

Further, alternatively or additionally, the generating means for generating the second signal removes no, one or more commands from the first signal.

Advantageously, an identification means identifies the type of the first signal and submits this information to the generating means.

Preferably, the first interface is adapted to receive infrared signals and the second interface is adapted to send CEC commands.

Further, preferably, the first interface is adapted to receive an infrared signal together with an HDMI signal and the second interface is adapted to send the CEC command together with the received HDMI signal, thereby looping the HDMI signal through the intermediate device.

Alternatively or additionally, the first interface is adapted to receive infrared signals and the second interface is adapted to send AVLink commands.

Preferably, the first interface is further adapted to receive an infrared signal together with a CVBS, YC or RGB signal and the second interface is further adapted to send the AVLink command together with the received CVBS, YC or RGB signal, thereby looping the CVBS, YC or RGB signal through the intermediate device.

Alternatively or additionally, the first interface is adapted to receive infrared signals and the second interface is adapted to send infrared signals.

Alternatively, the first interface is adapted to receive CEC commands and the second interface is adapted to send infrared signals.

Further, in this alternative embodiment the first interface is adapted to receive CEC commands together with a HDMI signal and the second interface is adapted to send infrared signals together with the received HDMI signal, thereby looping the HDMI signal through the intermediate device.

Alternatively or additionally, the first interface is adapted to receive AVLink commands and the second interface is adapted to send infrared signals.

Preferably, the first interface is further adapted to receive AVLink commands together with a CVBS, YC or RGB signal and the second interface is further adapted to send infrared signals together with the received CVBS, YC or RGB signal, thereby looping the CVBS, YC or RGB signal through the intermediate device (1).

Advantageously, the first interface and the second interface enable a wired or wireless connection between the intermediate device and at least one further electronic device.

The present invention will now be explained in more detail in the following description of preferred embodiments in relation to the enclosed drawings in which
Fig. 1 shows a schematic block diagram of an intermediate device according to the present invention;
Fig. 2 is a flow chart showing the process steps of the method according to the present invention;
Fig. 3 shows an example of a network comprising an intermediate device according to the present invention; and
Figures 4a and 4b are examples showing the functionality of the intermediate device according to the present invention.

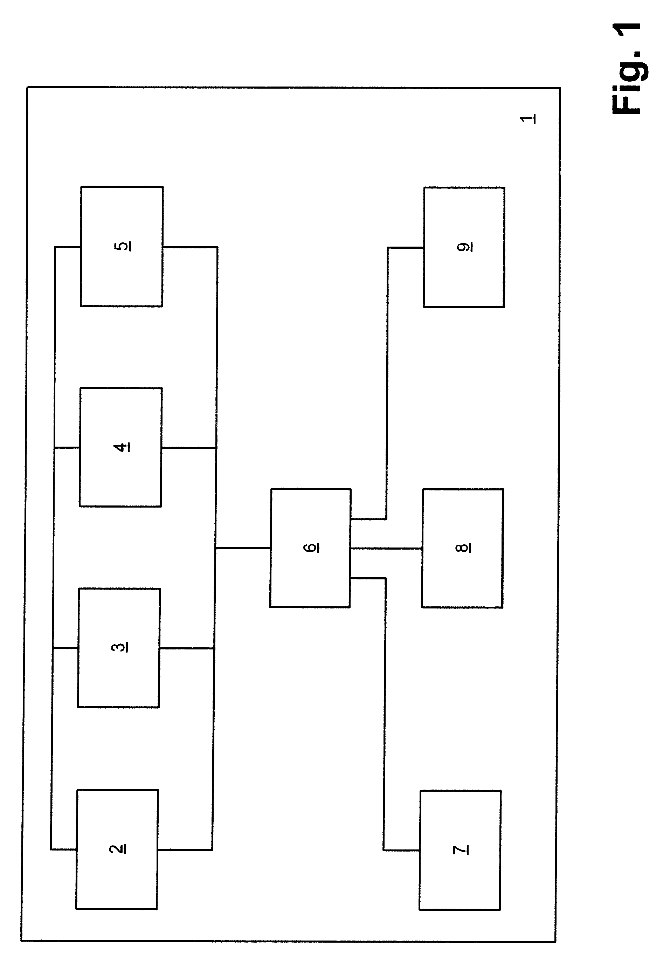

Fig. 1 is a schematic block diagram showing the elements of an intermediate device 1 according to the present invention. The intermediate device 1 comprises a first interface 2 enabling communication between the intermediate device 1 and a first electronic device, whereby said first interface 2 is enabled to receive signals from said first electronic device. The first interface 2 is further enabled to receive additional signals not coming from the first electronic device but coming for example from a remote controller. The intermediate device 1 further comprises a second interface 3 enabling communication with a second electronic device and being adapted to send signals to said second electronic device. In addition to receiving signals the first interface 2 may also be adapted to send signals. Likewise, in addition to sending signals the second interface 3 may also be adapted to receive signals. The connection between the first interface 2 and the first electronic device as well as between the second interface and the second electronic device can be wired or wireless. The intermediate device 1 may also comprise further interfaces enabling further communication with other electronic devices or with a network or the like.

The intermediate device 1 further comprises a generating means 4 and an identification means 5. The identification means 5 serves for identifying the type of the received signals, i.e. the type of the signals which are received via the first interface 2. The identification means 5 hereby identifies the format, the provenience, the content and the like of the received signal and submits this information to the generating means 4. The generating means 4 then based upon the received signal generates a further signal which then is sent via the second interface 3. In the following the signals received via the first interface 2 will be denoted "first signal" and the signals sent via the second interface 3 will be denoted as "second signal". Hereby, the first signal comprises signals received from the first electronic device as well as signals received from other sources.

The first signal received via the first interface 2 may be a single signal or may be a compound of several signals, whereby the several signals may have the same or different formats. The first signal may also comprise a single or several commands. In general, the term "signal" when used in the present invention may relate to data transmitted and/or received in a specific format, to commands or messages transmitted and/or received in a specific format or according to a specific communication protocol or to any combination of two or more of the above mentioned possibilities. Specifically, the first interface 2 may be a single interface or may comprise several interfaces each adapted to receive signals of different formats and/or types. Preferably, the first interface 2 is adapted to receive high definition multimedia interface (HDMI) signals, infrared (IR) signals, video home system (VHS) signals, consumer electronics control (CEC) commands, AVlink commands, composite video blanking and sync (CVBS) signals, separate video (YC) signals, RGB signals and/or other signals or a combination of any of the mentioned signals. Likewise, the second interface 3 may comprise a single interface or may consist of several interfaces being adapted to send a single signal or a multitude of signals which may have one format or different formats or may base on different communication protocols. The second signal may also comprise a single or several commands. Specifically, the second interface 3 is adapted to send HDMI signals, IR signals, VHS signals, CEC commands, AVlink commands, composite video blanking and sync (CVBS) signals, separate video (YC) signals, RGB signals and/or other signals or communication standard commands.

The generating means 4 depending on the identified number and/or types and/or formats of the received first signal will based upon the received first signal generate a second signal which is to be sent via the second interface 3. The term "generate" in the context of the present invention comprises a changing of the format of the first signal into the format of the second signal, removing one or more commands from the received first signal and sending the signal without the commands or receiving a first signal and adding one or more commands to the first signal and then sending the first signal together with the commands. In case the first signal comprises two different data streams and/or commands, the generating means 4 is adapted to remove one of the two signal parts and to only send the remaining signal part as second signal. Vice versa the generating means 4 is also adapted to add a signal part to a received first signal and to send the combined signal parts as second signal. The generating means 4 hereby is adapted to accomplish all of the above mentioned processing methods at the same time, e.g. the generating means may first transform the format of the signals and then add or remove one or more commands or vice versa. The intermediate device 1 is also adapted to loop signals or parts of signals through without changing them at all.

In case that more electronic devices are connected to the intermediate device 1, the identification means 5 depending on the content of the received first signal can also decide, for which second electronic device the signal is intended and the generating means 4 is then adapted to generate a second signal with a specific addressee and the intermediate device 1 will then send the signal to the specific second electronic device. Further, in case that the second electronic device has several interfaces or inputs, the identification means 5 is also adapted to recognize for which interface or input the received first signal is intended and the generating means 4 can then add a command to the first signal telling the second electronic device to switch to a specific input.

The first interface 2, the second interface 3, the generating means 4 and the identification means 5 are all connected to and in data communication with a controller 6. The controller 6 hereby controls and supervises the transmission and processing of data and/or information within the intermediate device 1. The controller 6 further supervises the operation of the intermediate device.

In addition the intermediate device 1 optionally may comprise an input means 7 for enabling input of data and/or information by a user. The input means 7 herefore may be a keyboard, a mouse, a touchpad, recognition of speech, an interface for receiving data input over a remote controller or any other interface enabling the user to input data and/or information or to select application programs. In addition, the intermediate device 1 optionally may comprise an output means 8 for outputting data and/or information to a user. The output means 8 herefore may be a display, a loudspeaker or any other graphical user interface adapted to output data and/or information to the user.

A memory 9 is further provided for temporally or permanently storing data, information, programs, applications and the like. The memory 9 hereby may be divided into different memory spaces each providing different types of memory, e.g. a random access memory RAM, a flash memory or other types.

The input means 7, the output means 8 and the memory 9 are all connected to and in data communication with the controller 6. The intermediate device 1 additionally may comprise further components necessary for the functionality, e.g. a power supply or a possibility to connect the intermediate device 1 to a power source, which are omitted in the Figures for the sake of clarity.

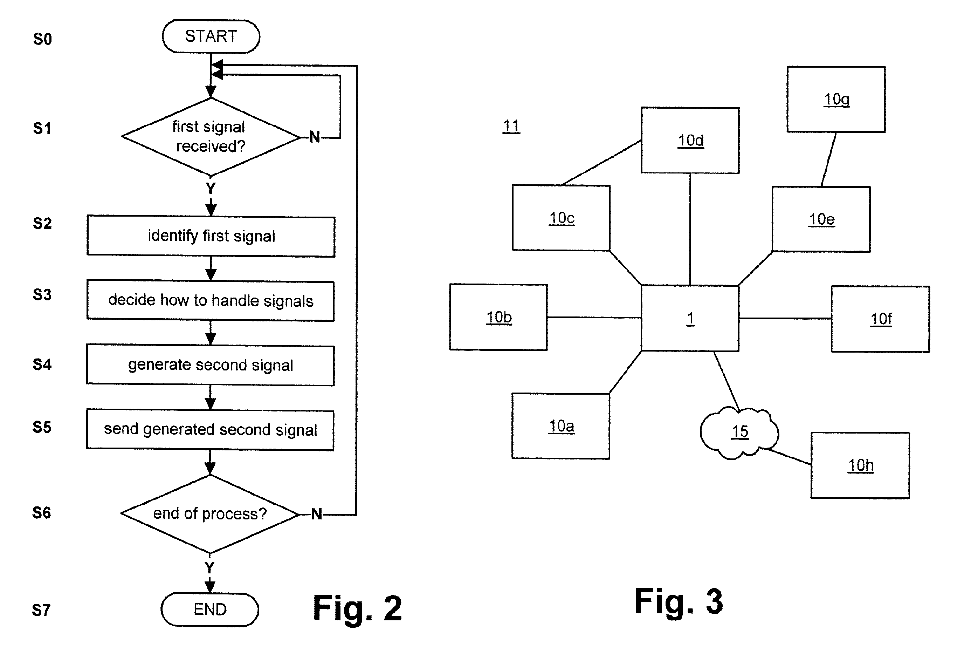

The intermediate device 1 according to the present invention solves the problems of compatibility problems between different electronic devices. As shown in Figure 3 when connecting two or more electronic devices 10a to 10h, then these electronic devices 10a to 10h probably will not have the same communication standards or the same installed software and/or hardware types. For enabling communication and data transmission between the electronic devices 10a to 10h the intermediate device 1 is provided between each of the electronic devices. Hereby, the connection can be wired or wireless. The connection can be direct, i.e. the intermediate device 1 can be connected directly to the further electronic devices or the intermediate device 1 can be connected by a series of other electronic devices to a specific further electronic device. In any case the intermediate device 1 is adapted to transmit and receive signals in order to translate the signals between the electronic devices, i.e. to adapt the signals transmitted between the electronic devices to the standards and software of the respective electronic device 10 to 10h.

Several examples of connection are shown in Figure 3. The intermediate device 1 is connected directly to further electronic devices 10a to 10f. The intermediate device 1 via a network 15, which can for example be the internet, is connected to a further electronic device 10h. A further electronic device 10g is connected in series or via a bus with the further electronic device 10e, which in turn is connected directly to the intermediate device 1. The intermediate device 1 thereby can communicate with the further electronic device 10g via the further electronic device 10e. It is to be noted, that Figure 3 is only an exemplary embodiment of a network and that the present intermediate device can be used within any type of network. In the present invention the term "further electronic device" generally refers to any electronic device connected in any of the above mentioned possible ways to the intermediate device 1. The terms "first electronic device" and "second electronic device" denote two electronic devices within the group of further electronic devices.

Several types of intermediate devices 1 are possible. The intermediate device 1 can be adapted to be only provided between two electronic devices. Another possibility is to provide the intermediate device 1 with several interfaces so that the intermediate device 1 can be connected to a plurality of electronic devices thereby transmitting and/or receiving signals from/to any of the electronic devices.

Specifically, with the intermediate device 1 according to the present invention a consumer electronics control (CEC) functionality can be added to devices which are older and have not installed the CEC. If the intermediate device 1 for example receives via the first interface 2 a CEC command from a first electronic device, it may generate an infrared (IR) signal including the same command, i.e. the same content as the CEC signal and send it via the second interface 3 to a further electronic device in order to transmit the content of the received CEC command to the further electronic device in a different form adapted to the requirements of the further electronic device. Hereby, the further electronic device even though it has not installed a CEC communication protocol it may nevertheless react on CEC commands by receiving the respective changed second signal, i.e. in the present example an IR signal, from the intermediate device 1.

With reference to Figure 2 the main process steps according to the method of the present invention will now be explained. The process starts in step S0 e.g. with switching on the intermediate device 1.

In the first step S 1 the intermediate device 1 checks, whether via the first interface 2 a first signal from a first electronic device has been received. If this is not the case, then the intermediate device 1 will go back to step S1 thereby being in a continuous process. Otherwise, if a first signal has been received, then in the next step S2 the identification means 5 identifies the type, format, provenience and the like of the first signal and submits this information to the generating means 4. In the next step S3 either the controller 6 or the generating means 4 may decide how to handle the received first signal. This may for example be accomplished based on information stored in the memory 9. In the memory 9 handling commands may be stored upon which it can be decided how to handle the received first signal and which second signal to generate. In the next step S4 the generating means 4 generates the second signal based upon the identification information, the stored handling information and based on the received first signal.

In the next step S5 the second generated signal is then sent via the second interface 3 to a second electronic device for which the received first signal was intended. In step S6 the intermediate device 1 can check, whether the end of the process is provided, i.e. whether for example a controlled switch off is provided. If this is the case, then the process ends in step S7 with switching off the intermediate device 1. Otherwise the process will go back to step S 1. It is to be noted that the present invention is not limited to the reception of a first signal from a first electronic device but may comprise also the reception of several first signals from several electronic devices. Same applies to the sending operation, i.e. the second signal can be sent to more than one second electronic device.

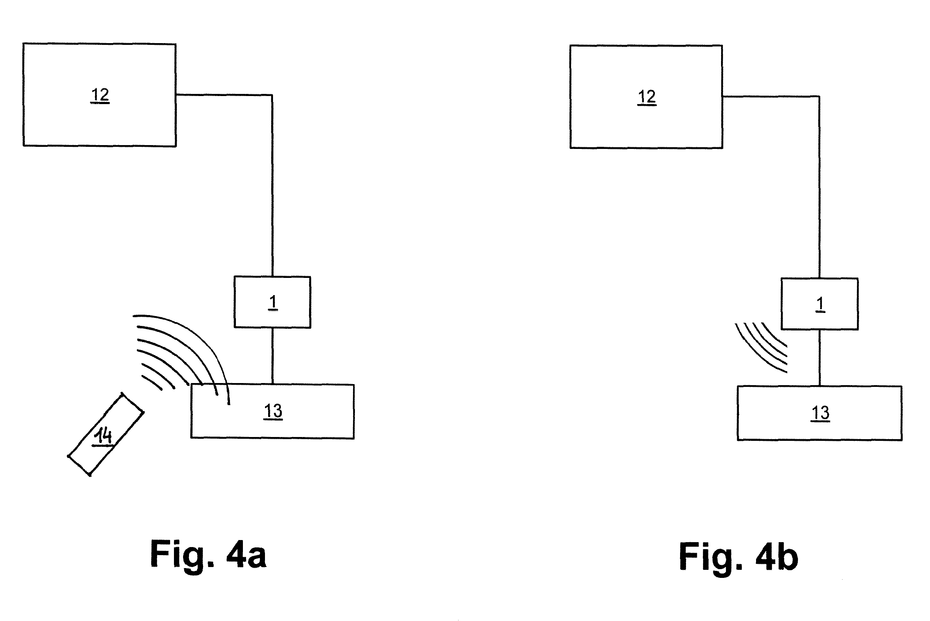

In the following, several examples and exemplary embodiments will be discussed showing the different application possibilities of the main idea according to the present invention. The exemplary embodiments will be explained in relation to Figures 4a and 4b where a system is shown comprising a display device 12, such as for example a TV, a monitor or the like and a playback device 13, such as a DVD player, a VHS video recorder or the like.

Between the display device 12 and the playback device 13 the intermediate device 1 is provided and all signals transmitted between those two devices are transmitted through the intermediate device 1.

In the first example as shown in Figure 4a the playback device 13 may be a DVD player without CEC functionality and the display device 12 may be a television comprising CEC functionality. In case that the user via a remote control 14 sends an infrared signal to the DVD player for initializing the playback of a DVD, then this infrared signal of the remote controller 14 can be received by the DVD player 13 as well as by the first interface 2 of the intermediate device 1. In this case the DVD player 13 will start with the playback and send the HDMI signal to the display device 12 via the intermediate device 1. At the same time the intermediate device 1 has received the IR signal from the remote controller 14 via the first interface 2 and can handle the received signal according to the requirements, i.e. can tell from the IR command of the remote controller 14 which CEC commands and/or other signals should be sent to the display device. The intermediate device 1 further receives the HDMI signal from the DVD player via the first interface 2 and then will add CEC commands to the HDMI signal on the CEC bus line telling the display device 12 to switch on and to switch to the corresponding HDMI input. The intermediate device 1 will loop through the HDMI signal received from the DVD player to the television 12 and additionally will generate the respective CEC commands which are also sent via the second interface 3 to the television 12. The CEC command hereby corresponds to the content of the received IR command, i.e. the functionalities are translated. A IR command telling play is for example translated into a OneTouchPlay CEC command sequence. Likewise, other commands can also be generated by the intermediate device, e.g. rewind, stop, pause or the like.

A further possibility is that the intermediate device 1 does not comprise an interface adapted to receive infrared signals. In this case, when a user presses the play button on the remote control 14 the infrared signal will be received by the DVD player which then will start playing and will send a HDMI signal to the display device 12. The intermediate device 1 then receives via the first interface 2 the HDMI signal and the identification means 5 recognises the type of the signal and the intended addressee of the signal, i.e. the display device 12, and then the generating means 4 will generate automatically a CEC command telling the display device 12 to switch on and to switch to the HDMI input. The HDMI signal together with the CEC command will then be sent via the second interface 3 to the display device 12. The intermediate device 1 hereby is looping the HDMI signal through without changing it.

Likewise as shown in Figure 4b the display device may send a HDMI signal together with a CEC command to the DVD player 13. In this case the HDMI signal as well as the CEC command is received via the first interface 2 by the intermediate device 1. The intermediate device 1 then via the identification means 5 identifies the type of the CEC command, and then via the second interface 3 will loop through the HDMI signal to the DVD recorder 13 and at the same time will send an infrared signal via the second interface 3 to the DVD player 13 in order to submit the content of the CEC command. For example the display device 12 has sent a CEC command telling to go into standby then the intermediate device 1 will send the respective infrared signal to the DVD player.

Instead of a DVD player also a VHS video recorder as playback device 13 can be provided. In this case instead of a HDMI signal a VHS signal will be sent to the display device 12. In this case, the intermediate device 1 will add for example AVlink commands or IR commands telling the display device 12 to switch on and to switch to a specific input, e.g. to switch to the scart input.

Alternatively, the intermediate device 1 in addition to the VHS signal can add a CEC command telling the display device 12 to switch on will and can add a further CEC command telling the display device 12 to switch to a specific input, e.g. to switch to the scart input. This alternative can be implemented in case the display device 12 has a combined HDMI/CEC input and further a scart input. Here fore either a standard CEC command may be adopted or a vendor specific CEC command is used for this feature.

In case that the intermediate device 1 is connected to a HDMI electronic device, then the intermediate device 1 can be adapted to read out the physical address of the electronic device. An electronic device may for example have several different input ports and/or output ports, whereby each port has an associated memory storing the respective physical address of the port. In this case the intermediate device 1, when connected via the first interface 2 or the second interface 3 to one of the ports, is adapted to read out the information stored in the respective memory thereby obtaining the physical address of the port. Alternatively this address setting can also be set-up by the user. This information can then be used for CEC communication.

The intermediate device 1 according to the present invention can also be adapted to send and/or receive IR or AVlink commands together with scart signals, CVBS signals, YC signals or RGB signals.

The intermediate device 1 is further adapted to receive and send IR signals thereby changing the content of the signals, for example by changing the command. Specifically, in case the intermediate device 1 via the first interface 2 receives a an IR signal telling for example the DVD recorder to play, then the intermediate device will generate a second signal with IR commands telling the display device to switch on, to switch to a specific input, to further switch on the sound system and the like.

In addition to the above transmission of different signal types also other reception and transmission of signal types is possible and the present invention is not limited to above mentioned HDMI, IR, VHS and CEC signals.

## Claims

1. Intermediate device (1) for receiving and sending signals, comprising
a first interface (2) for enabling communication with at least a first electronic device (10a, 10b ... 10h) and for receiving a first signal from at least said first electronic device (10a, 10b ... 10h),
a generating means (4) for generating a second signal based on said first signal and a second interface (3) for enabling communication with a second electronic device (10a, 10b ... 10h) and for sending the generated second signal to said second electronic device (10a, 10b ... 10h).

2. Intermediate device (1) according to claim 1,
wherein the generating means (4) for generating the second signal converts the format of at least a part of the first signal into the format of the second signal.

3. Intermediate device (1) according to claim 1 or 2,
wherein the generating means (4) for generating the second signal adds no, one or more commands to the first signal.

4. Intermediate device (1) according to claim 1, 2 or 3,
wherein the generating means (4) for generating the second signal removes no, one or more commands from the first signal.

5. Intermediate device (1) according to any of the preceding claims,
wherein an identification means (5) identifies the type of the first signal and submits this information to the generating means (4).

6. Intermediate device (1) according to any of the preceding claims,
wherein the first interface (2) is adapted to receive infrared signals and the second interface (3) is adapted to send CEC commands.

7. Intermediate device (1) according to claim 6,
wherein the first interface (2) is further adapted to receive an infrared signal together with an HDMI signal and the second interface (3) is further adapted to send the CEC command together with the received HDMI signal, thereby looping the HDMI signal through the intermediate device (1).

8. Intermediate device (1) according to any of the preceding claims,
wherein the first interface (2) is adapted to receive infrared signals and the second interface (3) is adapted to send AVLink commands.

9. Intermediate device (1) according to claim 8,
wherein the first interface (2) is further adapted to receive an infrared signal together with a CVBS, YC or RGB signal and the second interface (3) is further adapted to send the AVLink command together with the received CVBS, YC or RGB signal, thereby looping the CVBS, YC or RGB signal through the intermediate device (1).

10. Intermediate device (1) according to any of the preceding claims,
wherein the first interface (2) is adapted to receive infrared signals and the second interface (3) is adapted to send infrared signals.

11. Intermediate device (1) according to any of the preceding claims,
wherein the first interface (2) is adapted to receive CEC commands and the second interface (3) is adapted to send infrared signals.

12. Intermediate device (1) according to claim 11,
wherein the first interface (2) is further adapted to receive CEC commands together with a HDMI signal and the second interface (3) is further adapted to send infrared signals together with the received HDMI signal, thereby looping the HDMI signal through the intermediate device (1).

13. Intermediate device (1) according to any of the preceding claims,
wherein the first interface (2) is adapted to receive AVLink commands and the second interface (3) is adapted to send infrared signals.

14. Intermediate device (1) according to claim 13,
wherein the first interface (2) is further adapted to receive AVLink commands together with a CVBS, YC or RGB signal and the second interface (3) is further adapted to send infrared signals together with the received CVBS, YC or RGB signal, thereby looping the CVBS, YC or RGB signal through the intermediate device (1).

15. Intermediate device (1) according to any of the preceding claims,
wherein the first interface (2) and the second interface (3) enable a wired or wireless connection between the intermediate device (1) and at least one further electronic device (10a, 10b ... 10h).

16. Method for operating an intermediate device (1) for receiving and sending signals, comprising the steps of
receiving a first signal from at least a first electronic device (10a, 10b ... 10h), generating a second signal based on said received first signal by a generating means (4) and
sending the generated second signal to a second electronic device (10a, 10b ... 10h).

17. Method according to claim 16,
wherein said step of generating a second signal comprises converting the format of at least a part of the first signal into the format of the second signal.

18. Method according to claim 16 or 17,
wherein said step of generating a second signal comprises adding no, one or more commands to the first signal.

19. Method according to claim 16, 17 or 18,
wherein said step of generating a second signal comprises removing no, one or more commands from the first signal.

20. Method according to any of the preceding claims,
comprising the step of identifying the type of the first signal and submitting this information to the generating means (4).

21. Method according to any of the preceding claims,
comprising the steps of receiving infrared signals and sending CEC commands.

22. Method according to claim 21,
further comprising the steps of receiving the infrared signals together with an HDMI signal and sending the CEC command together with the received HDMI signal, thereby looping the HDMI signal through the intermediate device (1).

23. Method according to any of the preceding claims,
comprising the steps of receiving infrared signals and sending AVLink commands.

24. Method according to claim 23,
further comprising the steps of receiving the infrared signals together with a CVBS, YC or RGB signal and sending the AVLink command together with the received CVBS, YC or RGB signal, thereby looping the CVBS, YC or RGB signal through the intermediate device (1).

25. Method according to any of the preceding claims,
comprising the steps of receiving infrared signals and sending infrared signals.

26. Method according to any of the preceding claims,
comprising the steps of receiving CEC commands and sending infrared signals.

27. Method according to claim 26,
further comprising the steps of receiving the CEC command together with an HDMI signal and sending the infrared signals together with the received HDMI signal, thereby looping the HDMI signal through the intermediate device (1).

28. Method according to any of the preceding claims,
comprising the steps of receiving AVLink commands and sending infrared signal.

29. Method according to claim 28,
further comprising the steps of receiving the AVLink commands together with a CVBS, YC or RGB signal and sending the infrared signal together with the received CVBS, YC or RGB signal, thereby looping the CVBS, YC or RGB signal through the intermediate device (1).

30. Method according to any of the preceding claims,
comprising the step of providing a wired or wireless connection between the intermediate device (1) and at least one further electronic device (10a, 10b ... 10h).
